# EUROPÄISCHE PATENTSCHRIFT

(11) **EP 0 671 207 B1**
(45) Veröffentlichungstag und Bekanntmachung des Hinweises auf die Patenterteilung: **03.05.2000**
(21) Anmeldenummer: 94810149.8
(22) Anmeldetag: 09.03.1994
(51) Int. Cl.: B01J 19/32, B01J 35/04, B01F 5/06, F28F 25/08

(54) **Flächiges Struckturelement und daraus gebildete Packung**
Flat structural element and packing formed thereof
Elément de structure plat et garnissage à partir de cela

(43) Veröffentlichungstag der Anmeldung: 13.09.1995
(73) Patentinhaber: Sulzer Chemtech AG, CH-8404 Winterthur (CH)
(72) Erfinder: Süess, Philipp, CH-8472 Seuzach (CH); Plüss, Raymond Charles, CH-8451 Kleinandelfingen (CH)
(74) Vertreter: Hammer, Bruno, Dr.

(56) Entgegenhaltungen:
- WO-A-90/10497
- DE-A- 2 032 292
- DE-A- 2 032 293
- FR-A- 2 086 365

## Beschreibung

Die Erfindung betrifft flächige Strukturelemente mit einer Vielzahl von nach einem vorgegebenen Muster verteilten Öffnungen sowie aus derartigen Strukturelementen aufgebaute Packungen.

Aus der WO 90/10497 ist eine Wirbelpackung bekannt, die sich aus Schichten von zickzackförmig gefalteten Blechen, sogenannten plissierten Matten, aufbauen läßt. Die Schichten sind parallel zu einer Achse, der Apparatachse, ausgerichtet, während die Faltkanten zu dieser Achse geneigt sind. Die Schichten sind alternierend derart angeordnet, daß ein System von Kanälen, die sich offen kreuzen, vorliegt. Die ungefalteten Bleche weisen ein schachbrettähnliches Muster auf, mit im wesentlichen rautenförmigen Feldern, deren eine Hälfte in Form von Durchbrüchen ausgebildet ist. Die andere Hälfte der Felder bildet die Strukturelemente der Packung. Die offenen Felder sind etwas kleiner, so daß sie als inselartige Öffnungen vorliegen und die geschlossenen Felder in den Eckpunkten durch linienartige Überlappungen miteinander verbunden sind. Durch die offenen Felder ergibt sich in der Packung ein zweites System von sich offen kreuzenden Kanälen, das quer zum ersten System ausgerichtet ist. Die Faltkanten verlaufen - in Richtung der Überlappungen - entlang eines Teils der Felderränder.

Bei der bekannten Packung ist vorgesehen, daß die in den Schichtblechen ausgebildeten Durchbrüche durch Ausstanzvorgänge gebildet werden. Nachteilig ist dabei vor allem, daß beinahe die Hälfte des Ausgangsmaterials verloren geht und außerdem aufgrund des bezüglich der Stanzwerkzeuge zu treffenden Aufwandes hinsichtlich der unter verfahrenstechnischen Aspekten erwünschten Formgebung der Öffnungen Beschränkungen gegeben sind.

Aufgabe der Erfindung ist es, flächige Strukturelemente unterschiedlichster und optimal an die jeweiligen verfahrenstechnischen Forderungen anpaßbarer Formgebung mit möglichst geringem Verlust an Material zu schaffen und es zu ermöglichen, aus diesen flächigen Strukturelementen geschichtete Packungen, insbesondere Packungen zu schaffen, die äußerst vielseitig einsetzbar sind.

Die Lösung dieser Aufgabe wird gemäß der Erfindung durch die Merkmale des Anspruchs 1 erbracht.

Von besonderer Bedeutung ist dabei, daß über den Zwischenschritt der Schaffung einzelner Flachmaterialstreifen und deren gegenseitige Verbindung nach definierter Relativversetzung nicht nur ein Materialverlust weitestgehend vermieden, sondern gleichzeitig erreicht wird, daß durch Wahl spezieller Schnittlinienverläufe eine sehr große Freiheit hinsichtlich der Lage, Größe, Form und Verteilung der Öffnungen in den flächigen Strukturelementen erhalten wird. Durch geeignete Faltung und entsprechende Wahl der Faltkantenverläufe lassen sich aus diesen flächigen Strukturelementen dreidimensionale Flachgebilde schaffen, die sich sehr vorteilhaft zum Aufbau geschichteter Systeme, insbesondere zum Aufbau von Packungen und speziell zum Aufbau von Wirbelpackungen eignen.

Besonders vorteilhafte Ausgestaltungen der flächigen Strukturelemente gemäß der Erfindung sowie deren Einsatz in Packungen sind in den Unteransprüchen angegeben.

Die Erfindung wird nachfolgend anhand von Ausführungsbeispielen unter Bezugnahme auf die Zeichnung erläutert. Es zeigen:
- Fig. 1: einen Ausschnitt aus einer bekannten Wirbelpackung (Idealfall),
- Fig. 2a, 2b: zwei Flächen mit rautenförmigen Feldern, die nach Zickzack-Kantung die Struktur der Fig. 1 ergeben,
- Fig. 3: eine Elementarzelle eines Punktegitters,
- Fig. 4: Herstellung einer Folie mit Durchbrüchen gemäß der Erfindung, bei welcher die Zähne der Schnittkante rautenförmig sind,
- Fig. 5: weitere Herstellung und erstes Beispiel mit zickzackförmiger Schnittkante und Zähnen, die einen Winkel von 120° einschließen,
- Fig. 6: weitere Herstellung und zweites Beispiel mit zickzackförmiger Schnittkante und Zähnen, die einen Winkel von 120° einschließen,
- Fig. 7: zickzackförmige Schnittkante mit Zähnen, die einen Winkel von 60° einschließen,
- Fig. 8 - 11: variante Formen der in Fig. 7 gezeigten Schnittkante,
- Fig. 12: streifenförmige Überlappung der Verbindungsstellen für die in Fig. 4 gezeigte Ausführungsform,
- Fig. 13: streifenförmige Überlappung der Verbindungsstellen für die in Fig. 9 gezeigte Ausführungsform,
- Fig. 14: Überlappung der Verbindungsstellen in Form einer kleinen Kreisfläche, für die in Fig. 4 gezeigte Ausführungsform,
- Fig. 15: Überlappung der Verbindungsstellen für die in Fig. 7 gezeigte Ausführungsform,
- Fig. 16: eine schematische Darstellung zur Erläuterung eines weiteren Beispiels der Herstellung eines flächigen Strukturelements nach der Erfindung, wobei die Öffnungen rechteckförmig gestaltet sind,
- Fig. 17: eine Darstellung zur Erläuterung einer weiteren Variante zur Herstellung eines flächigen Strukturelements nach der Erfindung,
- Fig. 18: eine Ausschnittsdarstellung einer Variante eines flächigen Strukturelements mit variierenden Öffnungen,
- Fig. 19: eine Teildarstellung eines flächigen Strukturelements aus unterschiedlichen Flachmaterialstreifen,
- Fig. 20: eine schematische Teildarstellung eines flächigen Strukturelements mit von gekrümmten Kanten begrenzten Öffnungen,
- Fig. 21: eine weitere schematische Teildarstellung eines flächigen Strukturelements aus zwei unterschiedlichen Arten von Flachmaterialstreifen,
- Fig. 22: eine schematische Teildarstellung eines flächigen Strukturelements mit zum Teil dreidimensional verformten Teilbereichen, und
- Fig. 23: eine schematische Teildarstellung einer Falt-Klemmverbindung zwischen zwei Flachmaterialstreifen.

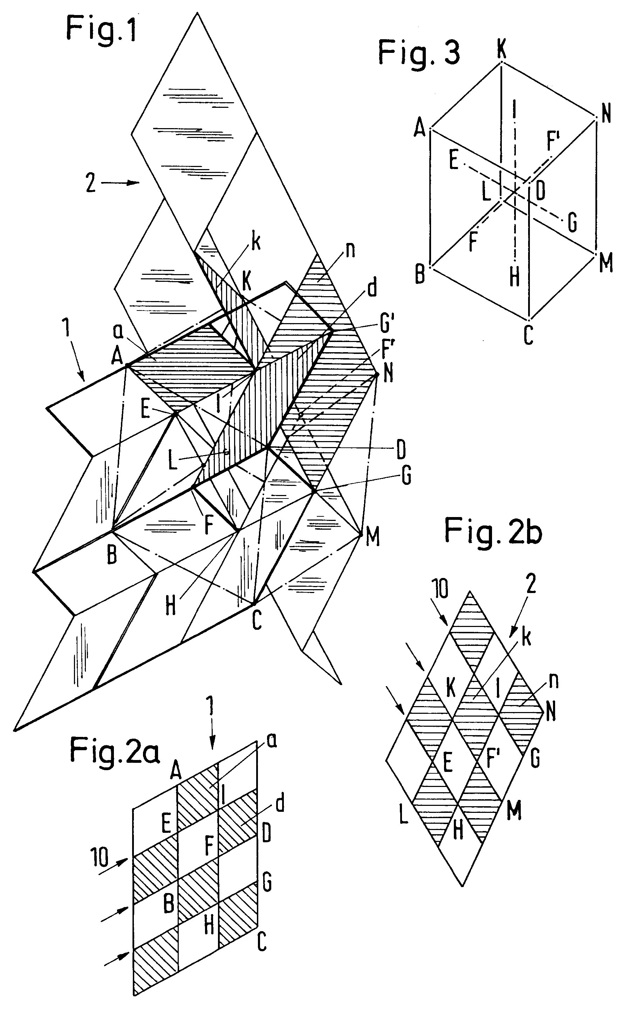

Anhand der Fig. 1 bis 3 wird der grundsätzliche Aufbau einer Wirbelpackung erläutert, die aus flächigen Strukturelementen aufgebaut ist.

Bei der dargestellten Wirbelpackung handelt es sich um eine geordnete Packung mit einer ventilatorartigen Anordnung von Leitflächen, die die Strömungsmedien aus ihrer Hauptströmungsrichtung nach allen Seiten auslenken und benachbarte Teilströme miteinander vermischen. Die Leitflächen sind die Strukturelemente der Packung. Den Gitterebenen, die senkrecht zur Apparatachse liegen, entsprechen zwei verschiedene Lagen von Oktaedern. In der einen Lage sind die Oktaederseiten alternierend offen bzw. geschlossen, während in der anderer Lage die Oktaeder alles offene Seiten aufweisen. Die Lagen sind ineinander derart verzahnt, daß die Oktaeder benachbarter Lagen der gleichen Sorte sich in ihren Polspitzen treffen. Die Oktaeder füllen den Raum nur zu zwei Dritteln aus; die Zwischenräume bestehen aus Tetraedern. Die Wirbelpackung ist aus flächenförmigen Strukturelementen aufgebaut. Diese Strukturelemente definieren ein Punktegitter, dessen senkrecht zur Apparatachse liegenden Gitterebenen Grundraster aus Vierecken bilden. Die Vierecke stellen jeweils einen äquatorialen Umfang eines Oktaeders dar und die Polspitzen dieser Oktaeder liegen auf den Punkten der benachbarten Gitterebenen.

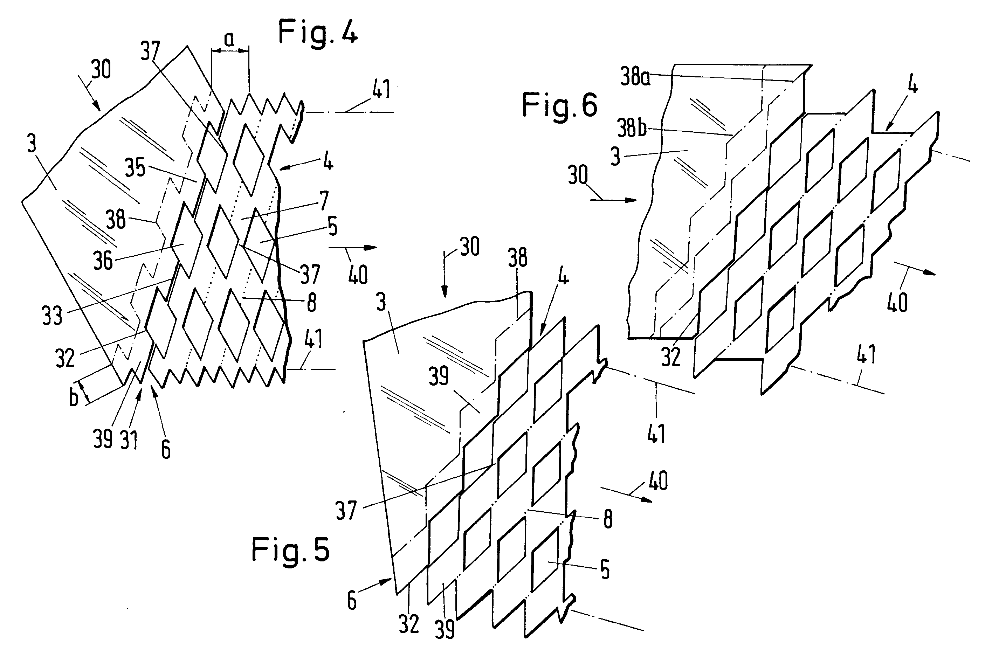

Das der Wirbelpackung zugeordnete Punktegitter ist in dem Sonderfall, daß die Strukturelemente Rhomben mit einem spitzen Winkel von 60° sind, ein kubisch-flächenzentriertes Gitter. Dies ist in Fig. 1 gezeigt; die Einheitszelle des Gitters ist der Kubus mit den Eckpunkten A, B, C, D, K, L, M sowie N und mit den Flächenmittelpunkten E, F, G, H, I sowie F' (siehe auch Fig. 3 mit einem in Richtung A-B gestreckten Kubus). Der dargestellte Packungsausschnitt setzt sich aus zwei zickzackartig gekanteten, mit rhombenförmigen Durchbrüchen versehenen Flächen 1 und 2 zusammen, die in ihrem ungekanteten Zustand in den Figuren 2a und 2b abgebildet sind. Die schraffiert gezeichneten Flächen (beispielsweise a und d) sind die geschlossenen Flächen; die übrigen Flächen stellen die Durchbrüche dar. Die Pfeile 10 geben Richtung und Lage der Faltkanten an. Zur praktischen Realisierung der in Fig. 1 dargestellten Struktur ist es - wie bereits erwähnt - nötig, daß die geschlossenen Rautenflächen an ihren Ecken durch linienartige Überlappungen verbunden sind (siehe Fig. 4 der WO 90/10497). Hier wird der Einfachheit halber die Verbindung zwischen den Strukturelementen als punktartige Verbindung dargestellt.

In Fig. 1 sind die Flächen a, d, n und k durch Schraffierung besonders hervorgehoben: Sie bilden eine ventilatorartige Anordnung von Leitflächen (Hauptströmungsrichtung ist H-I). Das durch die Flächenmittelpunkte E, ... F' gegebene Oktaeder - es ist ein reguläres Oktaeder - gehört zur Sorte mit lauter offenen Seitenflächen. Zwischen den beiden Flächen d und n liegt ein zur Hälfte gezeigtes Oktaeder der anderen Sorte (alternierend offene und geschlossene Seitenflächen); die Eckpunkte dieser Hälfte sind I, D, G, N und G'.

Die Zeichnungen, anhand derer nachfolgend die erfindungsgemäßen Strukturen beschrieben werden, illustrieren den kubisch-flächenzentrierten Sonderfall. Es gilt aber auch die Verallgemeinerung, daß die Einheitszelle A, ... N nicht kubisch sondern ein beliebiges Parallelepiped ist, beispielsweise ein Quader, wie er in Fig. 3 dargestellt ist (die Kante AB ist länger als die Kanten BC und AK).

Die in Fig. 1 gezeigte Struktur stellt den Idealfall dar, für den die Leitflächen a, d, k und n sich exakt in einem Punkt I berühren. Wenn die beiden Flächen 1 und 2 in Richtung der Lagen (d. h. in Richtung der Ebene, die beispielsweise durch die Punkte A, B und C aufgespannt wird) gegeneinander verschoben sind, so liegt im allgemeinen eine Abweichung vom Idealfall vor. Auch bei einer solchen Abweichung bleiben die Vorteile der Wirbelpackung bis zu einem gewissen Grade erhalten. Dies gilt auch, wenn die Flächen 1 und 2 willkürlich nebeneinander angeordnet sind. Die Erfindung soll auch diese Fälle umfassen, bei denen der Idealfall nicht vorliegt.

Fig. 4 zeigt, wie aus einem tafel- oder folienartigen Ausgangsmaterial 3 ein flächiges Strukturelement 4 mit rautenförmigen Öffnungen 5 gemäß der Erfindung hergestellt werden kann.

Die Pfeile 40 und 30 geben jeweils den Vorschub des flächigen Ausgangsmaterials 3 und der durch Schnitte gebildeten Flachmaterialstreifen 6 an, welcher schrittweise um die Schrittlängen a bzw. b erfolgt.

An der Schnittfront 31 berühren sich das Ausgangsmaterial 3 und ein durch einen Schnitt abgetrennter Flachmaterialstreifen 6. Die Schnittlinie 32 verläuft derart, daß ein Zahnmuster mit rautenförmigen Zähnen 35 und Lücken 36 entsteht. An den einander gegenüberliegenden Stirnseiten 33 der Zähne 35 erfolgt eine Verbindung, beispielsweise durch Schweißen.

Die im nächsten Arbeitsschritt erzeugte Schnittlinie ist strichpunktiert bei 38 dargestellt, d. h. der jeweils gebildete Flachmaterialstreifen 6 wird durch die Schnittlinien 32 und 38 begrenzt und besteht aus einer Reihe von Rauten 39, die an den Eckpunkten miteinander verbunden sind. Die Verbindungsbrücken befinden sich alternierend bei den Eckpunkten mit den stumpfen bzw. spitzen Winkeln der Rauten 39.

Das als Folge der Schnitte, des Versatzes und der Verbindung der Flachmaterialstreifen 6 erhaltene flächige Strukturelement 4 umfaßt geschlossene Teilflächen 7 und Öffnungen 5. Es ist an den seitlichen Rändern gezackt, wobei die Zacken längs der Randlinien 41 weggeschnitten werden können. Es kann aber auch vorteilhaft sein, die Zacken auf der einen Seite stehen zu lassen und in einer aus solchen flächigen Strukturelementen gebildeten Packung einer Stoffaustauschkolonne als Abtropfnasen zu verwenden.

Die Verbindungsnähte 8 zwischen den einzelnen Flachmaterialstreifen 6 können beispielsweise durch Schweißen oder Löten geschaffen und vollautomatisch hergestellt werden.

Bei der Ausführungsvariante nach Fig. 5 ist die Schnittlinie 32 (oder 38) zickzackförmig ausgebildet. Die einzelnen Abschnitte bzw. Strecken dieser zickzackförmigen Schnittlinie sind gleich lang und schließen jeweils einen Winkel von 120° ein, wobei zu erwähnen ist, daß dieser Winkel auch anders gewählt werden kann, jedoch vorzugsweise im Bereich zwischen 110° und 150° liegt. Der Flachmaterialstreifen 6, der zwischen den Schnittlinien 32 und 38 gelegen ist, besitzt wiederum die Form einer Kette von Rauten 39, die an den Eckpunkten miteinander verbunden sind. Die Verbindungsbrücken 37 befinden sich in diesem Fall jeweils an den spitzen Winkeln. Verbindungsnähte 8, die beispielsweise durch Schweißen oder Löten erzeugt werden, machen aus den Flachmaterialstreifen 6 das gewünschte flächige Strukturelement 4 mit den Öffnungen 5.

Fig. 6 erläutert eine Ausführungsvariante des anhand der Fig. 5 dargestellten Herstellungsverfahrens, das im wesentlichen zu dem gleichen flächigen Strukturelement 4 führt, wobei aber die Vorschubrichtung 30 des Ausgangsmaterials 3 um 90° gedreht ist, und zwar bei gleicher Vorschubrichtung 40 des flächigen Strukturelements 4.

Der Unterschied ergibt sich dadurch, daß alternierend eine Schnittlinie 38a und eine Schnittlinie 38b erzeugt werden, die um eine halbe Zahnlänge in Richtung der Schnittfront 31 gegeneinander verschoben sind. Die Schnittlinie 32 entspricht der Schnittlinie 38b.

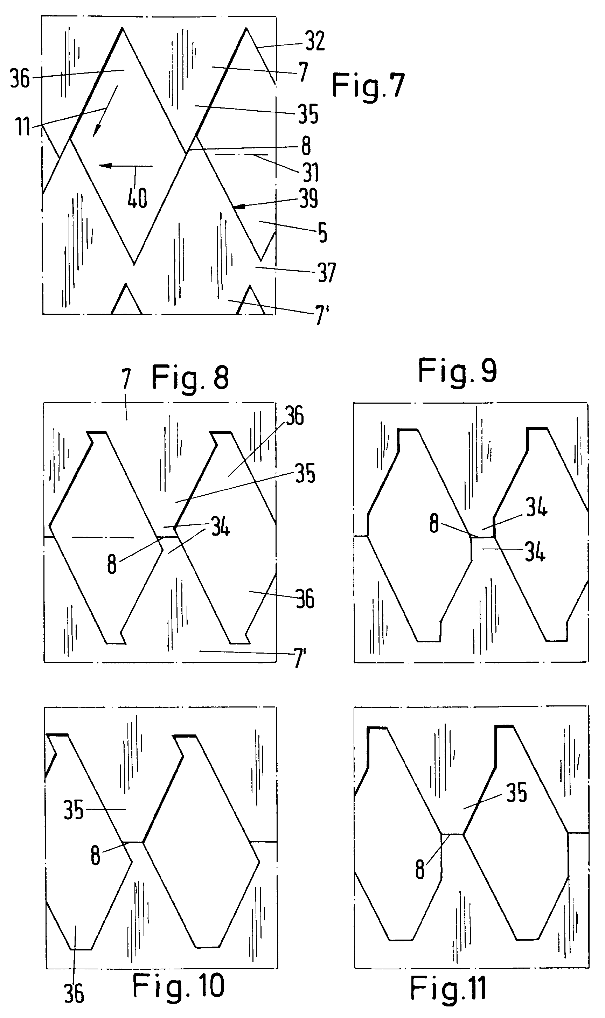

Fig. 7 zeigt eine Ausführungsform der Erfindung, bei der die Schnittlinie 32 durch einen zickzackförmigen Streckenzug mit den Zähnen 35 und den Lücken 36 gebildet ist. Die einzelnen Strecken sind dabei gleich lang und schließen jeweils einen Winkel von 60° ein. Dieser Winkel kann aber auch anders gewählt werden, er liegt jedoch vorzugsweise im Bereich zwischen etwa 30° und 70°.

Die geschlossenen Teilfächen 7 und 7', die nur ausschnittsweise dargestellt sind, liegen wiederum als Ketten von Rauten 39 vor, die an den Eckpunkten miteinander verbunden sind, wobei jetzt aber die verbindenden Brücken 37 sich immer bei den Eckpunkten mit den stumpfen Winkeln befinden.

Indem das Teilflächenstück 7' in Richtung des Pfeiles 11 von der Schnittlinie 32 weggerückt wird, ergeben sich rautenförmige Öffnungen 5. Dabei werden entlang der aneinandergrenzenden Schnittlinien-Teilstrecken die neuen Verbindungsnähte 8 hergestellt. Bei der Herstellung des flächigen Strukturelementes 4 verläuft die Vorschubrichtung (Pfeil 40) parallel zur Schnittfront 31 der geschlossenen Teilflächen 7, 7'.

Bei den in den Fig. 8 bis 11 gezeigten Varianten der in Fig. 7 dargestellten Ausführungsform weisen die Zähne 35 an ihren Spitzen jeweils einen kurzen Abschnitt 34 auf, wobei zwei derartige Abschnitte 34 einen Verbindungsbereich bilden. Es kann in diesem Bereich ein Verlöten oder Schweißen mit und ohne Überlappung erfolgen, aber es ist auch möglich, in diesen Bereichen eine mechanische Falt-Klemmverbindung vorzusehen.

Wenn das erhaltene flächige Strukturelement zickzackförmig gefaltet wird, dann können die Faltlinien so gewählt werden, daß sie durch die Verbindungsbereiche zwischen den Flachmaterialstreifen verlaufen, was insbesondere dann vorteilhaft ist, wenn diese Flachmaterialstreifen 6 über Falt-Klemmverbindungen miteinander verbunden werden, da dann durch die zur Herstellung der Zick-Zack-Struktur erforderliche Faltkante eine Versteifung und Verfestigung dieser speziellen Verbindung erhalten werden kann, und zwar insbesondere dann, wenn gemäß einer speziellen Ausführungsform der Erfindung Faltkante und Faltverbindung unter einem Winkel zueinander verlaufen.

In den Fig. 10 und 11 ist eine asymmetrische Variante dargestellt, wobei bei dieser Ausführungsform die jeweilige Faltkante nicht über die Verbindungsnaht 8 geführt wird. Bei den in den Fig. 8 und 10 gezeigten Ausführungsformen besteht zwischen den Zähnen 35 und den Lücken 36 eine Verhakung solange die Verbindungsnähte 8 noch nicht geschaffen sind.

Die Erzeugung der entsprechend den Schnittlinien 32, 38 verlaufenden Schnitte kann mittels mechanischer oder nichtmechanischer Verfahren ausgeführt werden.

Beispiele für mechanische Verfahren sind:

Stanzen mit oszillierendem Stanzwerkzeug, scherenartiges Trennen mit Profilmessern oder Kontursägen mit Drahtsäge.

Beispiele für nichtmechanische Schneidtechniken sind:

Wasserstrahl-Schneiden, Schneiden mit Laser, Mikroplasma oder Gasflamme oder auch Drahterodieren.

Die Verfahren mit der Drahtsäge oder mit der Drahterosion eignen sich besonders dann, wenn mehrere aufeinandergelegte Folien oder Bleche gleichzeitig geschnitten werden sollen.

Für die Erzeugung der Verbindungen zwischen den Flachmaterialstreifen 6 kommen einerseits mechanische Verfahren, andererseits aber auch Schweiß-, Löt- oder Klebeverfahren in Betracht.

Für die mechanischen Verbindungen können folgende Beispiele genannt werden:

Nieten mit oder ohne Zusatzmaterial, Klammern mit oder ohne Zusatzmaterial, druckknopfartige Verbindungen oder Falt-Klemmverbindungen.

Als vorteilhafte Schweißverfahren sind zu nennen:

Schweißen mit Mikroplasma oder Laser, Widerstandsroll- oder Widerstandspunktschweißen.

Für verschiedene der vorgenannten Verbindungsverfahren ist es erforderlich, daß für die Verbindungsstellen oder Verbindungsbereiche kleine, flächenartige Überlappungen vorgesehen werden.

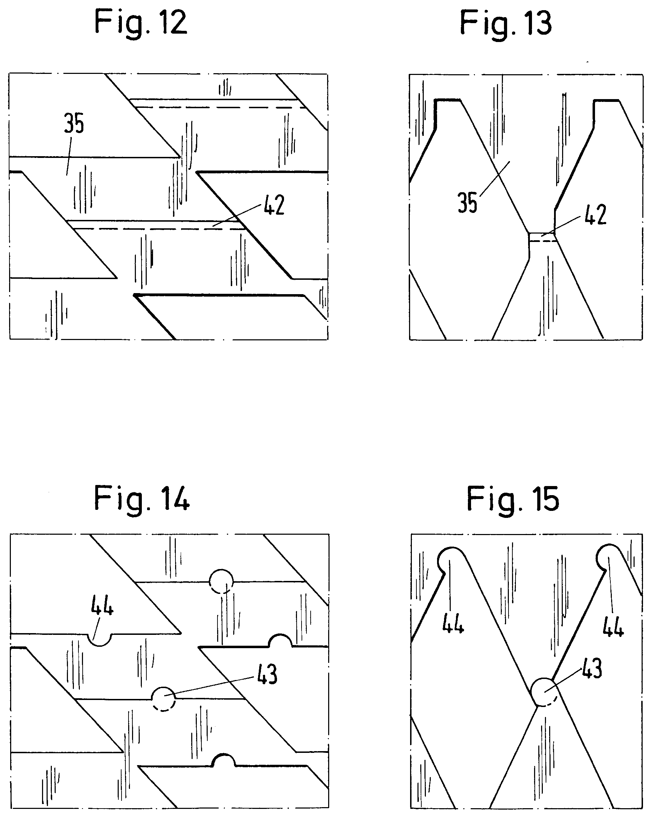

Die Fig. 12 und 13 zeigen streifenförmige Überlappungen 42, und in den Fig. 14 und 15 sind punktförmige Überlappungen 43 zu entnehmen. Dementsprechend sind halbkreisförmige Ausnehmungen 44 im Ausgangsmaterial vorgesehen.

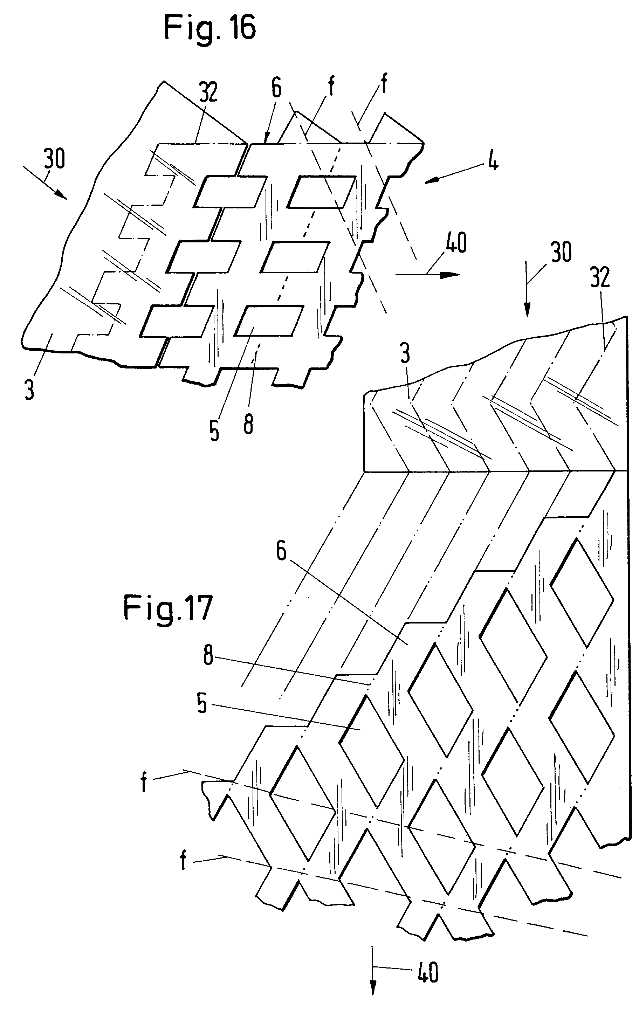

Fig. 16 zeigt eine weitere Variante der Herstellung eines erfindungsgemäßen flachen Strukturelements mit rechteckigen Öffnungen 8, die durch Verwendung mäanderförmiger Schnittlinien 2 erhalten werden. Wie bei den bisher bereits beschriebenen Ausführungsformen erfolgt die Bildung des flächigen Strukturelements 4 ohne jeglichen Materialverlust, indem die durch die speziell gelegten Schnitte gebildeten Flachmaterialstreifen 6 gegeneinander versetzt unter Ausbildung von Öffnungen 5 miteinander verbunden werden.

Um aus dem erhaltenen flächigen Strukturelement 4 ein dreidimensionales, insbesondere zur Verwendung in Wirbelpackungen geeignetes Strukturelement zu schaffen, wird das flächige Strukturelement 4 vorzugsweise zickzackförmig entsprechend Faltlinien f verformt, wie sie in Fig. 16 beispielsweise eingezeichnet sind. Der Verlauf der Faltlinien kann dabei so gewählt werden, daß sich einerseits optimale Gesamtstrukturen hinsichtlich der jeweils gewünschten Flüssigkeits- und Gasführungen und andererseits stabilitätserhöhende Verfestigungen der Strukturelemente ergeben.

Fig. 17 zeigt in schematischer Weise eine Variante eines Fertigungsverfahrens, bei dem die Schnittlinien 32 nicht in Querrichtung des Ausgangsmaterials 3, sondern in dessen Längsrichtung gelegt und demgemäß die gegenseitige Versetzung der Flachmaterialstreifen 6 in gleicher Richtung wie die Vorschubrichtung 30 des Ausgangsmaterials 3 vorgenommen werden kann.

Es stellt einen wesentlichen Vorteil der Erfindung dar, daß die Fertigung des jeweiligen flächigen Strukturelementes in unterschiedlicher Weise erfolgen kann und somit eine Anpassung an die betrieblich gegebenen Fertigungsmöglichkeiten gewährleistet ist.

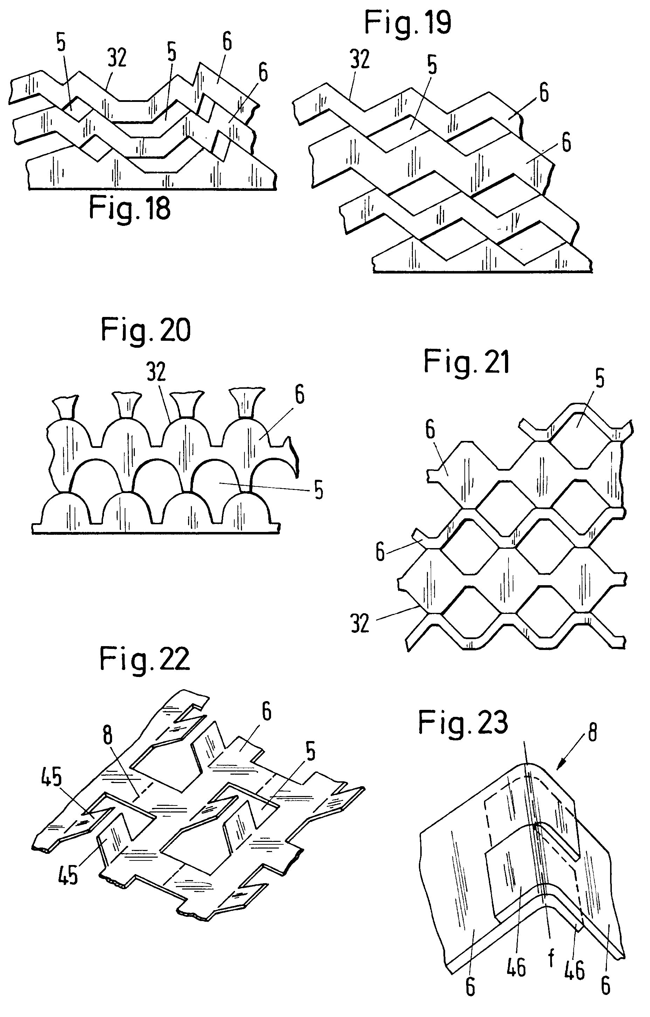

Die Fig. 18 bis 20 zeigen weitere Beispiele von flächigen Strukturelementen gemäß der Erfindung.

Die Fig. 18 verdeutlicht, daß die Schnittlinien 32 unter Beibehaltung einer Periodizität so unregelmäßig gewählt werden können, daß sich nach gegenseitiger Versetzung der gebildeten Flachmaterialstreifen 6 und deren erneuten Verbindung Öffnungen 5 unterschiedlicher Form und Größe ergeben, was für manche Anwendungsfälle durchaus von Vorteil sein kann.

Fig. 19 zeigt einen Ausschnitt eines flächigen Strukturelements, das aus Flachmaterialstreifen von zickzackförmiger Ausgestaltung zusammengefügt ist, wobei jedoch die Flachmaterialstreifen 6 unterschiedliche Breite besitzen, so daß sich über die Gesamtfläche des Strukturelements hinsichtlich der Verteilung und gegebenenfalls auch hinsichtlich der Größe der Öffnungen 5 eine gezielte Abweichung von der völligen Regelmäßigkeit ergibt, die auch in Verbindung mit Knickfaltungen vorteilhafte Ergebnisse erbringt.

Das Ausführungsbeispiel nach Fig. 20 zeigt, daß die Schnittlinie 32 auch gekrümmte Abschnitte aufweisen kann und auf diese Weise Öffnungen 5 erhalten werden, die sehr spezielle Form besitzen und auch besonderen Gegebenheiten angepaßt werden können.

Auch bei dem in Fig. 21 gezeigten Ausführungsbeispiel sind die Flachmaterialstreifen 6 verlustfrei aus einem tafelförmigen Ausgangsmaterial geschnitten, wobei aufgrund des gewählten Verlaufs der Schnittlinien 32 zwei unterschiedliche Formen von Flachmaterialstreifen gebildet sind, nämlich ein vergleichsweise schmaler, wellenförmig verlaufender Flachmaterialstreifen und ein jeweils zwischen zwei derartigen schmalen Streifen angeordneter Flachmaterialstreifen mit breiten und schmalen Abschnitten, der sich durch die wellenförmige Schnittlinienführung beim Schneiden der flachen Streifen ergibt. Durch entsprechende Versetzung und erneutes Verbinden der Flachmaterialstreifen werden in der bereits beschriebenen Weise die Öffnungen 5 gebildet.

Fig. 22 zeigt in schematischer Weise das auch bei anderen Ausführungsformen von flächigen Strukturelementen verwendbare Prinzip der Verwendung von Flachmaterialstreifen, die über Teilbereiche ihrer Länge dreidimensional verformt sind. Im Ausführungsbeispiel der Fig. 22 wird die dreidimensionale Verformung durch Abwinkeln von Stegteilen in gleicher oder beispielsweise abwechselnd entgegengesetzter Richtung realisiert, aber diese dreidimensionale Verformung von Teilbereichen kann auch durch Verdrillen von Teilbereichen der Flachmaterialstreifen 6 erreicht werden.

Fig. 23 zeigt ein Beispiel für eine Falt-Klemmverbindung zwischen zwei Flachmaterialstreifen. Dazu werden sich gegenüberliegende Randbereiche von Flachmaterialstreifen im vorgesehenen Verbindungsbereich geschlitzt und die dadurch gebildeten Lappen verzahnend ineinandergesteckt. Fixiert wird diese Klemmverbindung durch Ausbildung einer Faltkante entsprechend der strichlierten Linie f.

Aus den flächigen Strukturelementen gemäß den vorstehend aufgezeigten und erläuterten Beispielen können Packungen, insbesondere Wirbelpackungen nach dem anhand der Fig. 1 erläuterten Grundprinzip besonders vorteilhaft hergestellt werden. Das Ausgangsmaterial kann metallisch sein oder aus einem Kunststoff bestehen. Es kann eine Oberflächenstrukturierung, beispielsweise eine feine Rillierung, aufweisen. Außerdem kann es mit Löchern perforiert sein, deren Durchmesser wesentlicher kleiner als diejenigen der zusätzlich gebildeten Öffnungen sind. Die Schnittkanten selbst können glatt oder auch gezahnt ausgeführt werden.

Beim Aufbau einer Wirbelpackung hat es sich auch als vorteilhaft erwiesen, die in den flächigen Strukturelementen noch vorhandenen geschlossenen Teilflächen jeweils mit einer weiteren Öffnung zu versehen, wobei der Durchmesser dieser Öffnung mindestens 2 mm, aber nicht mehr als etwa 4 mm betragen soll.

Für eine gemäß der Erfindung aufgebaute Packung stehen verschiedene Verwendungsmöglichkeiten offen, von denen beispielsweise angeführt wird:

Die Verwendung in einer Kolonne für einen Stoffaustausch und/oder Wärmeaustausch zwischen einem Rieselfilm und einem Gasstrom, wobei zwecks gleichmäßiger Benetzung eine horizontale Rillierung der Strukturelemente vorgesehen sein kann.

Verwendung in einem Reaktor, in dem die Packung als Träger für einen Katalysator ausgebildet ist, oder die Verwendung in einem statischen Mischer für fluide Medien.

## Patentansprüche

1. Flächiges Strukturelement (4) mit einer Vielzahl von nach einem vorgegebenen Muster verteilten Oeffnungen (5), wobei jede Oeffnung (5) durch zueinander winklig und/oder gekrümmt verlaufende Kanten jeweils zweier benachbarter Flachmaterialstreifen (6) aus einer Vielzahl von Flachmaterialstreifen (6) begrenzt ist, deren einander zugeordnete Stirnseiten (33) aneinanderstossend oder überlappend miteinander verbunden sind
dadurch gekennzeichnet, dass die Flachmaterialstreifen (6) durch Zerteilen eines tafel- oder folienförmigen Ausgangsmaterials (3) entsprechend einer vorgebbaren Schnittlinie (32, 38) gebildet sind, die in Richtung einer Schnittfront (31) periodisch wiederkehrende, winkelig und/oder gekrümmt verlaufende Abschnitte aufweist.

2. Strukturelement nach Anspruch 1,
dadurch **gekennzeichnet,**
daß im Strukturelement (4) aneinandergrenzende Flachmaterialstreifen (6) unter Ausbildung der Öffnungen (5) in ihrer Längsrichtung gegeneinander versetzt angeordnet sind.

3. Strukturelement nach einem der vorhergehenden Ansprüche,
dadurch **gekennzeichnet,**
daß das tafel- oder folienförmige Ausgangsmaterial (3) bereits mit Durchbrüchen und/oder mit ein- oder beidseitig überstehenden Oberflächenstrukturen versehen ist.

4. Strukturelement nach einem der vorhergehenden Ansprüche,
dadurch **gekennzeichnet,**
daß die Schnittlinie (32, 38) mäanderförmig verläuft und benachbarte Flachmaterialstreifen (6) derart gegeneinander versetzt angeordnet sind, daß jeweils Lücken (36) und Zähne (35) gegenseitig ausgerichtet und dadurch Rechtecköffnungen gebildet sind.

5. Strukturelement nach einem der Ansprüche 1 bis 3,
dadurch **gekennzeichnet,**
daß die Schnittlinie (32, 38) zickzackförmig verläuft und benachbarte Flachmaterialstreifen (6) derart gegeneinander versetzt angeordnet sind, daß die gebildeten Öffnungen (5) Rautenform besitzen.

6. Strukturelement nach Anspruch 5,
dadurch **gekennzeichnet,**
daß die zickzackförmige Schnittlinie (32, 38) aus aufeinanderfolgenden einzelnen Strecken besteht, die gleich lang sind und jeweils einen einheitlichen Winkel im Bereich zwischen 30 und 150°, vorzugsweise zwischen 30 und 70° einschließen.

7. Strukturelement nach Anspruch 5 oder 6,
dadurch **gekennzeichnet,**
daß die durch die Schnittlinie (32, 38) gebildeten Zähne (35) an ihrer Spitze jeweils einen kurzen Abschnitt (34) aufweisen, der im wesentlichen parallel zur Schnittlinie (32) verläuft oder gekrümmt ausgebildet ist, und daß diese Abschnitte (34) Verbindungsstellen bilden.

8. Strukturelement nach einem der vorhergehenden Ansprüche,
dadurch **gekennzeichnet,**
daß der Verlauf der Schnittlinie (32, 38) derart gewählt ist, daß durch die gegeneinander versetzt angeordneten Flachmaterialstreifen (6) unterschiedliche große und/oder unterschiedlich geformte Gruppen von Öffnungen (5) gebildet sind.

9. Strukturelement nach einem der vorhergehenden Ansprüche,
dadurch **gekennzeichnet,**
daß die Flachmaterialstreifen (6) identisch ausgebildet sind.

10. Strukturelement nach einem der Ansprüche 1 bis 8,
dadurch **gekennzeichnet,**
daß die Flachmaterialstreifen (6) zumindest zum Teil unterschiedliche Breite aufweisen.

11. Strukturelement nach einem der vorhergehenden Ansprüche,
dadurch **gekennzeichnet,**
daß zumindest ein Teil der Flachmaterialstreifen (6) über Teilbereiche ihrer Länge dreidimensional verformt, insbesondere verdrillt ausgebildet ist.

12. Strukturelement nach einem der vorhergehenden Ansprüche,
dadurch **gekennzeichnet,**
daß die Flachmaterialstreifen (6) an ihren Verbindungsstellen (42, 43) verschweißt, verlötet, verklebt oder durch Falt-Verklemmung miteinander verbunden sind.

13. Strukturelement nach einem der vorhergehenden Ansprüche,
dadurch **gekennzeichnet,**
daß die von den Flachmaterialstreifen gebildete Gesamtfläche entsprechend einer Vielzahl zueinander paralleler Linien (f) gefaltet ist, wobei die Faltkanten abwechselnd in zueinander parallelen Ebenen gelegen sind.

14. Strukturelement nach Anspruch 13,
dadurch **gekennzeichnet,**
daß daß der gegenseitige Abstand einander benachbarter Faltlinien (f) periodisch unterschiedlich ist.

15. Strukturelement nach Anspruch 13 oder 14,
dadurch **gekennzeichnet,**
daß zumindest ein Teil der Faltlinien (f) durch die Verbindungsbereiche (42, 43) benachbarter Flachmaterialstreifen (6) verläuft.

16. Strukturelement nach Anspruch 15,
dadurch **gekennzeichnet,**
daß im Falle einer Falt-Verklemmung zwischen benachbarten Flachmaterialstreifen die jeweilige Faltlinie (f) unter einem Winkel durch die Falt-Klemmstelle verläuft.

17. Strukturelement nach einem der vorhergehenden Ansprüche,
dadurch **gekennzeichnet,**
daß die Flachmaterialstreifen (6) aus in sich geschlossenen Ringen bestehen.

18. Strukturelement nach einem der vorhergehenden Ansprüche,
dadurch **gekennzeichnet,**
daß das tafel- oder folienförmige Ausgangsmaterial aus einem metallischen Material oder aus einem Kunststoff besteht.

19. Packung, gekennzeichnet durch eine Schichtung aus mehreren flächigen Strukturelementen (4) nach einem oder mehreren der vorhergehenden Ansprüche, wobei vorzugsweise zumindest ein Teil dieser flächigen Strukturelemente (4) zickzackförmig gefaltet ist.

20. Packung nach Anspruch 19,
**gekennzeichnet** durch die Ausbildung eines ersten Systems von sich offen kreuzenden und durch die Faltungen gebildeten Kanälen und die Ausbildung eines zweiten Systems von sich offen kreuzenden und durch die Öffnungen (5) in den Strukturelementen (4) gebildeten Kanälen, das quer zum ersten Kanalsystem verläuft.

21. Packung nach Anspruch 18 oder 19,
dadurch **gekennzeichnet,**
daß die Strukturelemente vollflächig mit einem Katalysatormaterial beschichtet oder platiert sind oder aus einem katalytischen Material bestehen.

22. Verwendung einer Packung nach einem oder mehreren der Ansprüche 19 bis 21 in einer Kolonne für einen Stoffaustausch und/oder Wärmeaustausch zwischen einem Rieselfilm und einem Gasstrom, wobei zwecks gleichmäßiger Benetzung eine horizontale Rillierung der Strukturelemente vorgesehen ist und/oder zusätzlich eine Perforierung vorgesehen sein kann.

23. Verwendung einer Packung nach einem der Ansprüche 19 bis 21, in einem Reaktor, in dem die Packung als Träger für einen Katalysator ausgebildet ist.

24. Verwendung einer Packung nach einem der Ansprüche 19 bis 21, in einem statischen Mischer für fluide Medien.

## Claims

1. A flat structural element (4) with a plurality of apertures (5) distributed in accordance with a predetermined pattern, each aperture (5) being bordered by edges that extend at an angle to one another and/or in a curve of respectively two adjacent strips of flat material (6) from a plurality of strips of flat material (6), whose end faces (33) associated with one another are connected to one another by abutting one another or overlapping,
**characterised in that** the strips of flat material (6) are formed by dividing a plate-type or foil-shaped starting material (3) along a predeterminable cutting line (32, 38), which in the direction of a cut front (31) has portions that periodically recur and extend angularly and/or in curved fashion.

2. A structural element according to Claim 1,
**characterised in that** strips of flat material (6) adjacent to one another in the structural element (4) are disposed offset in relation to one another in their longitudinal direction with the formation of apertures (5).

3. A structural element according to one of the preceding Claims,
**characterised in that** the plate-type or foil-type starting material (3) is already provided with openings and/or with surface structures protruding at one or both sides.

4. A structural element according to one of the preceding Claims,
**characterised in that** the cutting line (32, 38) runs in a meander shape and adjacent strips of material (6) are disposed offset in relation to one another in such a manner that in each case gaps (36) and teeth (35) are mutually aligned and as a result rectangular apertures are formed.

5. A structural element according to one of Claims 1 to 3,
**characterised in that** the cutting line (32, 38) extends in a zig-zag shape and adjacent strips of material (6) are disposed offset in relation to one another in such a manner that the formed apertures (5) have a lozenge shape.

6. A structural element according to Claim 5,
**characterised in that** the zig-zag cutting line (32) consists of successive individual lengths which are of equal length and each enclose a uniform angle in the range between 30 and 150°, preferably between 30 and 70°.

7. A structural element according to Claim 5 or 6,
**characterised in that** the teeth (35) formed by the cutting line (32, 38) each have a short portion (34) at their tip, which extends substantially parallel to the cutting line (32) or has a curved construction,
**and in that** these portions (34) form connection sites.

8. A structural element according to one of the preceding Claims,
**characterised in that** the course of the cutting line (32, 38) is chosen in such manner that by the strips of flat material (6) disposed offset in relation to one another groups of apertures (5) of different sizes and/or of different shapes are formed.

9. A structural element according to one of the preceding Claims,
**characterised in that** the strips of flat material (6) have an identical construction.

10. A structural element according to one of Claims 1 to 8,
**characterised in that** the strips of flat material (6) have varying widths at least to some extent.

11. A structural element according to one of the preceding Claims,
**characterised in that** at least one part of the strips of flat material (6) are deformed three-dimensionally over sub-regions of their length, in particular have a twisted design.

12. A structural element according to one of the preceding Claims,
**characterised in that** the strips of flat material (6) are welded, soldered, glued or connected to one another by folding-jamming.

13. A structural element according to one of the preceding Claims,
**characterised in that** the overall surface formed by the strips of flat material is folded along a plurality of mutually parallel lines (f), the fold lines being laid alternately in mutually parallel planes.

14. A structural element according to Claim 13,
**characterised in that** the mutual spacing of fold lines (f) that are adjacent to one another periodically varies.

15. A structural element according to Claim 13 or 14,
**characterised in that** at least a part of the fold lines (f) extends through the connection regions (42, 43) of adjacent strips of flat material (6).

16. A structural element according to Claim 15,
**characterised in that** in the event of folding-jamming between adjacent strips of flat material the respective fold line (f) extends at an angle through the folding-clamping point.

17. A structural element according to one of the preceding Claims,
**characterised in that** the strips of flat material (6) are made of intrinsically closed rings.

18. A structural element according to one of the preceding Claims,
**characterised in that** the plate-type or foil-type starting material is made from a metallic material or from a plastic material.

19. A packing,
characterised by a layered arrangement of several flat structural elements (4) in accordance with one or more of the preceding Claims, preferably at least one part of these flat structural elements (4) being folded in zig-zag fashion.

20. A packing according to Claim 19,
**characterised by** the formation of a first system of ducts that openly intersect and are formed by the folds and the formation of a second system of ducts that openly intersect and are formed by the apertures (5) in the structural elements (4), which second system extends transversally to the first system of ducts.

21. A packing according to Claim 18 or 19,
**characterised in that** the structural elements are coated or plated over their complete surface with a catalyst material or are made from a catalytic material.

22. Use of a packing according to one or more of Claims 19 to 21 in a column for mass exchange and/or heat exchange between a trickling film and a gas stream, a horizontal channelling of the structural elements being provided for the purpose of uniform wetting and/or it being possible to provide a perforation.

23. Use of a packing according to one of Claims 19 to 21 in a reactor in which the packing is constructed as a substrate for a catalyst.

24. Use of a packing in accordance with one of Claims 19 to 21, in a static mixer for fluid media.

## Revendications

1. Elément de structure plat (4) comportant une pluralité d'ouvertures (5) réparties selon un dessin prédéterminé, où chaque ouverture (5) est délimitée par des arêtes s'étendant d'une manière angulaire et/ou courbée les unes aux autres respectivement de deux bandes de matériau plates avoisinantes (6) d'une pluralité de bandes de matériau plates (6), dont les côtés frontaux (33) orientés les uns vers les autres sont assemblés bout-à-bout ou avec un recouvrement, caractérisé en ce que les bandes de matériau plates (6) sont formées par la division d'un matériau de départ (3) en forme de plaque ou de feuille selon une ligne de coupe prédéfinissable (32, 38), qui présente des tronçons répétés périodiquement dans la direction d'un front de coupe (31) et s'étendant d'une manière angulaire et/ou courbée.

2. Elément de structure selon la revendication 1, caractérisé en ce que des bandes de matériau plates (6) avoisinantes dans l'élément de structure (4) sont décalées les unes contre les autres dans leur direction longitudinale en formant les ouvertures (5).

3. Elément de structure selon l'une des revendications précédentes, caractérisé en ce que le matériau de départ en forme de plaque ou de feuille (3) est déjà pourvu de perçages et/ou de structures de surface dépassant d'un ou des deux côtés.

4. Elément de structure selon l'une des revendications précédentes, caractérisé en ce que la ligne de coupe (32, 38) s'étend en forme de méandre et que des bandes de matériau plates avoisinantes (6) sont décalées les unes contre les autres de façon que respectivement des espaces (36) et des dents (35) soient alignés mutuellement et que des ouvertures rectangulaires soient ainsi formées.

5. Elément de structure selon l'une des revendications 1 à 3, caractérisé en ce que la ligne de coupe (32, 38) s'étend en forme de zigzag et que des bandes de matériau plates avoisinantes (6) sont décalées les unes contre les autres de sorte que les ouvertures formées (5) ont une forme de losange.

6. Elément de structure selon la revendication 5, caractérisé en ce que la ligne de coupe en zigzag (32, 38) est constituée de tronçons individuels successifs qui ont la même longueur et qui forment respectivement un angle unitaire dans la plage comprise entre 30 et 150°, de préférence entre 30 et 70°.

7. Elément de structure selon la revendication 5 ou 6, caractérisé en ce que les dents (35) formées par la ligne de coupe (32, 38) présentent à leur pointe respectivement un tronçon court (34) qui s'étend sensiblement parallèlement à la ligne de coupe (32) ou qui est courbé, et en ce que ces tronçons (34) forment des emplacements d'assemblage.

8. Elément de structure selon l'une des revendications précédentes, caractérisé en ce que l'allure de la ligne de coupe (32, 38) est choisie de façon que par les bandes de matériau plates (6) décalées les unes par rapport aux autres, des groupes d'ouvertures (5) de grandeurs différentes et/ou de formes différentes soient formées.

9. Elément de structure selon l'une des revendications précédentes, caractérisé en ce que les bandes de matériau plates (6) sont réalisées d'une manière identique.

10. Elément de structure selon l'une des revendications 1 à 8, caractérisé en ce que les bandes de matériau plates (6) ont une largeur différente au moins en partie.

11. Elément de structure selon l'une des revendications précédentes, caractérisé en ce qu'au moins une partie des bandes de matériau plates (6) est déformée tridimensionnellement sur des zones partielles de leur longueur, notamment par torsion.

12. Elément de structure selon l'une des revendications précédentes, caractérisé en ce que les bandes de matériau plates (6), à leurs emplacements d'assemblage (42, 43), sont soudées, brasées, collées ou assemblées par pliage-serrage.

13. Elément de structure selon l'une des revendications précédentes, caractérisé en ce que la face totale formée par les bandes de matériau plates est pliée selon une multitude de lignes f parallèles les unes aux autres, où les arêtes de pliage se situent alternativement dans des plans parallèles les uns aux autres.

14. Elément de structure selon la revendication 13, caractérisé en ce que l'écart mutuel de lignes de pliage avoisinantes (f) diffère périodiquement.

15. Elément de structure selon la revendication 13 ou 14, caractérisé en ce qu'au moins une partie des lignes de pliage (f) passe à travers les zones d'assemblage (42, 43) de bandes de matériau plat avoisinantes (6).

16. Elément de structure selon la revendication 15, caractérisé en ce que dans le cas d'un pliage-serrage entre des bandes de matériau plates avoisinantes, la ligne de pliage respective (f) s'étend selon un angle à travers l'emplacement de pliage-serrage.

17. Elément de structure selon l'une des revendications précédentes, caractérisé en ce que les bandes de matériau plates (6) sont constituées d'anneaux fermés sur euxmêmes.

18. Elément de structure selon l'une des revendications précédentes, caractérisé en ce que le matériau de départ en forme de plaque ou de feuille est constitué d'un matériau métallique ou d'une matière synthétique.

19. Garnissage, caractérisé par un empilage de plusieurs éléments de structure plats (4) selon l'une ou plusieurs des revendications précédentes, où de préférence au moins une partie de ces éléments de structure plats (4) est pliée en zigzag.

20. Garnissage selon la revendication 19, caractérisé par la réalisation d'un premier système de canaux se croisant ouvertement et formés par les pliages et la réalisation d'un deuxième système de canaux se croisant ouvertement et formés par les ouvertures (5) dans les éléments de structure (4), qui s'étend transversalement au premier système de canaux.

21. Garnissage selon la revendication 18 ou 19, caractérisé en ce que les éléments de structure sont revêtus ou plaqués sur toute leur surface d'un matériau de catalyseur ou sont réalisés en un matériau catalytique.

22. Utilisation d'un garnissage selon l'une ou plusieurs des revendications 19 à 21, dans une colonne pour un transfert de matières et/ou un échange thermique entre un film ruisselant et un flux gazeux où, en vue d'un mouillage uniforme, il est prévu un rainurage horizontal des éléments de structure et/ou il peut être prévu additionnellement une perforation.

23. Utilisation d'un garnissage selon l'une des revendications 19 à 21, dans un réacteur dans lequel le garnissage est réalisé comme support de catalyseur.

24. Utilisation d'un garnissage selon l'une des revendications 19 à 21, dans un mélangeur statique pour des milieux fluides.
